# EUROPEAN PATENT SPECIFICATION

(11) **EP 3 040 872 B1**
(45) Date of publication and mention of the grant of the patent: **04.07.2018**
(21) Application number: 15200802.5
(22) Date of filing: 17.12.2015
(51) Int. Cl.: G06F 13/40

(54) **ELECTRONIC DEVICE AND DATA TRANSMISSION SYSTEM**
ELEKTRONISCHE VORRICHTUNG UND DATENÜBERTRAGUNGSSYSTEM
DISPOSITIF ÉLECTRONIQUE ET SYSTÈME DE TRANSMISSION DE DONNÉES

(30) Priority: 31.12.2014 CN 201410851029
(43) Date of publication of application: 06.07.2016
(73) Proprietor: Xiaomi Inc., Beijing 100085 (CN)
(72) Inventor: LEI, Zhenfei, Beijing 100085 (CN); SUN, Wei, Beijing 100085 (CN); WANG, Xiangdong, Beijing 100085 (CN)
(74) Representative: Perrot, Emilie

(56) References cited:
- US-A1- 2008 133 802
- US-A1- 2008 150 512

## Description

### TECHNICAL FIELD

The present invention relates to the field of computer technologies, and more particularly, to an electronic device and a data transmission system.

### BACKGROUND

With rapid developments of computer technologies, a variety of electronic devices have been widely applied, and have become important tools in people's daily work and life. In order to facilitate data transmission among the electronic devices, people have designed for the electronic devices various types of data transmission interfaces, among which a USB (Universal Serial Bus) interface, which is very common data transmission interface.

As technologies develop, there have been diverse types of USB interfaces, among which a micro USB interface, applied in a mobile device such as a cellphone, a tablet PC or the like in particular. A micro USB interface is a very common type of USB interface, and a Type C USB interface is a most recently-formulated USB interface and will replace the micro USB interface in the future. In the coming days, devices having a Type C USB interface and devices having a micro USB interface will exist in the market concurrently. Conversion lines for the Type C USB interface and the micro USB interface may provide data connection for the devices having the two different interfaces. In such a conversion line, an Identity (ID) pin of the micro USB interface is generally connected to a CC1 pin (a pin in the Type C USB interface) and a CC2 pin (a pin in the Type C USB interface) of the Type C USB interface.

In some devices having the Type C USB interface, the CC1 pin and the VBUS (power supply) are connected to each other via a resistor, a voltage of the VBUS is generally 5V, and a normal working voltage of the ID pin of the micro USB interface should be 1.8V. Thus, for such a device having a Type C USB interface, when the device is connected to a device having a micro USB interface via a conversion line, the device having the micro USB interface may be damaged.

Document US 2008/150512 discloses an electronic device connected through a USB interface.

### SUMMARY

In order to overcome the problems existing in the related arts, embodiments of the present invention provide an electronic device and a data transmission system. Technical solutions are as follows.

According to a first aspect, the invention relates to a first electronic device, the first electronic device comprising a micro universal serial bus (USB) interface, a central processing unit (CPU) and a diode, wherein:
a pull-up circuit of an Identity (ID) pin of the CPU is connected to a line between the ID pin of the CPU and an ID pin of the micro USB interface;
the diode is provided in the line between the ID pin of the CPU and the ID pin of the micro USB interface, and is positioned between the pull-up circuit and the ID pin of the micro USB interface; and
the diode has a conducting direction pointing from the ID pin of the CPU to the ID pin of the micro USB interface.

When the first electronic device is connected to a device having a Type C USB interface via a conversion line, and a CC1 pin and a VBUS are connected in the device having the Type C USB interface, then the diode may isolate a voltage of the VBUS from a voltage at the ID pin of the CPU. Consequently, the first electronic device may be prevented from being damaged.

Optionally, a first resistor is connected in series in the line between the ID pin of the micro USB interface and the ID pin of the CPU.

By providing the first resistor, the ID pin of the CPU may be further protected, and in a case where a voltage at the ID pin of the micro USB interface is relatively large, the first resistor can further decrease the reverse current.

Optionally, the first resistor is provided in a line between the pull-up circuit and the ID pin of the CPU.

Optionally, the pull-up circuit comprises a pull-up power supply and a second resistor.

The resistance value of the second resistor may be set such that the resistance value is greater than a specified lower limit of resistance value to guarantee the amplitude of changes in the voltage at the ID pin of the CPU when this type of device having the Type C USB interface is connected to the first electronic device, and thereby the recognition rate is increased.

Optionally, a resistance value of the second resistor is greater than a lower limit of a preset resistance value.

Optionally, a voltage of the pull-up power supply is 1.8V.

Optionally, the diode comprises a Schottky diode.

A Schottky diode has an extremely strong forward (i.e., a conducting direction) conducting capability and reverse (i.e., a direction opposite to the conducting direction) protective capability. So the Schottky diode can protects the line between the ID pin of the CPU and the ID pin of the micro USB interface.

According to a second aspect, the invention relates to a data transmission system, the data transmission system comprising a second electronic device and the first electronic device as described above, the second electronic device comprising a Type C USB interface, wherein:
the Type C USB interface of the second electronic device is connected to the micro USB interface of the first electronic device via a conversion line.

Optionally, a CC1 pin and a CC2 pin of the Type C USB interface are connected to the ID pin of the micro USB interface via the conversion line;
a power supply VBUS pin of the Type C USB interface is connected to a VBUS pin of the micro USB interface via the conversion line;
a D- pin of the Type C USB interface is connected to a D- pin of the micro USB interface via the conversion line;
a D+ pin of the Type C USB interface is connected to a D+ pin of the micro USB interface via the conversion line;
a ground GND pin of the Type C USB interface is connected to a GND pin of the micro USB interface via the conversion line.

Advantageous effects brought by the technical solutions provided by the embodiments of the present invention may include:
In embodiments of the present invention, a first electronic device comprises a micro USB interface, a CPU and a diode, wherein a pull-up circuit of an ID pin of the CPU is connected to a line between the ID pin of the CPU and an ID pin of the micro USB interface, the diode is provided in the line between the ID pin of the CPU and the ID pin of the micro USB interface, and is positioned between the pull-up circuit and the ID pin of the micro USB interface, and the diode has a conducting direction pointing from the ID pin of the CPU to the ID pin of the micro USB interface. Thus, if the first electronic device is connected to a device having a Type C USB interface via a conversion line and a CC1 pin and a VBUS are connected in the device having the Type C USB interface, then the diode may isolate a voltage of the VBUS from a voltage at the ID pin of the CPU. Consequently, the electronic device may be prevented from being damaged.

### BRIEF DESCRIPTION OF THE DRAWINGS

In order to more clearly explain the technical solutions in the embodiments of the present invention, hereinafter, the brief introduction to the drawings required to be used in the depiction of the embodiments will be given. It is apparent that the following drawings only illustrate some of the embodiments in the present invention, and those skilled in the art could obtain other drawings based on these drawings without inventive labor.
Fig. 1 is a structure diagram illustrating an electronic device provided by an embodiment of the present invention;
Fig. 2 is a structure diagram illustrating a data transmission system provided by an embodiment of the present embodiment;
Fig. 3 is a structure diagram illustrating an electronic device provided by an embodiment of the present invention;
Fig. 4 is a structure diagram illustrating a data transmission system provided by an embodiment of the present invention;
Fig. 5 is a structure diagram illustrating a data transmission system provided by an embodiment of the present invention; and
Fig. 6 is a structure diagram illustrating a data transmission system provided by an embodiment of the present invention.

**Reference numbers herein are listed as follows:**

| | |
|---|---|
| 100 First electronic device | 200 Second electronic device |
| 1 Micro USB interface | 2 CPU |
| 3 Diode | 4 Pull-up circuit |
| 5 First resistor | 6 Third resistor |
| 7 Type C USB interface | 8 Conversion line |
| 11 ID pin of the micro USB interface | 12 VBUS pin of the micro USB interface |
| 13 D- pin of the micro USB interface | 14 D+ pin of the micro USB interface |
| 15 GND pin of the micro USB interface | 21 ID pin of the CPU |
| 41 Pull-up power supply | 42 Second resistor |
| 71 CC1 pin of the Type C USB interface | 72 CC2 pin of the Type C USB interface |
| 73 VBUS pin of the Type C USB interface | 74 D- pin of the Type C USB interface |
| 75 D+ pin of the Type C USB interface | 76 GND pin of the Type C USB interface |

### DETAILED DESCRIPTION

In order to make objects, the technical solutions and advantages of the present invention more clear, hereinafter, the embodiments of the present invention will be described in further detail in conjunction with the accompanying drawings.

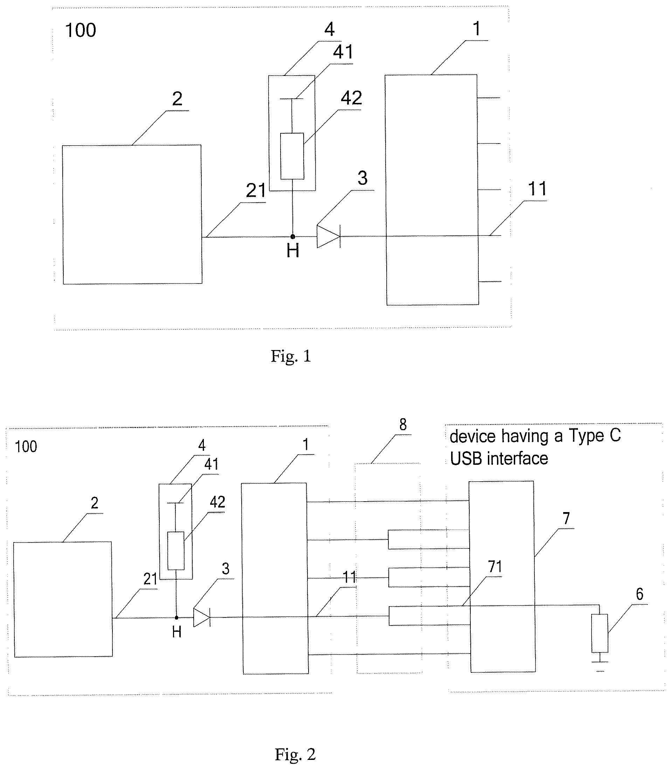

An embodiment of the present invention provides an electronic device (hereinafter referred to as a first electronic device 100). As shown in Fig. 1, the first electronic device 100 includes a micro universal serial bus (USB) interface 1, a central processing unit (CPU) 2 and a diode 3.

A pull-up circuit of an identity (ID) pin 21 of the CPU is connected to a line between the ID pin 21 of the CPU and an ID pin 11 of the micro USB interface. The diode 3 is provided in the line between the ID pin 21 of the CPU and the ID pin 11 of the micro USB interface, and is positioned between the pull-up circuit and the ID pin 11 of the micro USB interface. A conducting direction of the diode 3 is a direction pointing from the ID pin 21 of the CPU to the ID pin 11 of the micro USB interface.

In an embodiment of the present invention, a first electronic device includes a micro USB interface, a CPU and a diode, wherein a pull-up circuit of an ID pin of the CPU is connected to a line between the ID pin of the CPU and an ID pin of the micro USB interface, the diode is provided in the line between the ID pin of the CPU and the ID pin of the micro USB interface, and is positioned between the pull-up circuit and the ID pin of the micro USB interface, and the diode has a conducting direction pointing from the ID pin of the CPU to the ID pin of the micro USB interface. Thus, if the first electronic device is connected to a device having a Type C USB interface via a conversion line and a CC1 pin and a VBUS are connected in the device having the Type C USB interface, then the diode may isolate a voltage of the VBUS from a voltage at the ID pin of the CPU. Consequently, the electronic device may be prevented from being damaged.

An embodiment of the present invention provides a first electronic device 100. As shown in Fig. 1, the first electronic device 100 includes a micro USB interface 1, a central processing unit (CPU) 2 and a diode 3. A pull-up circuit 4 of an ID pin 21 of the CPU is connected to a line between the ID pin 21 of the CPU and an ID pin 11 of the micro USB interface. The diode 3 is provided in the line between the ID pin 21 of the CPU and the ID pin 11 of the micro USB interface, and is positioned between the pull-up circuit 4 and the ID pin 11 of the micro USB interface. The diode 3 has a conducting direction pointing from the ID pin 21 of the CPU to the ID pin 11 of the micro USB interface.

The diode 3 is an electronic device having characteristics of unidirectional conducting of current. In the present embodiment, the diode 3 may be a Schottky diode which has extremely strong forward (i.e., a conducting direction) conducting capability and reverse (i.e., a direction opposite to the conducting direction) protective capability.

In an embodiment, the first electronic device 100 may be a device having a micro USB interface, such as a cellphone, a Tablet PC or the like. The first electronic device 100 is provided with the micro USB interface 1, and the ID pin 11 of the micro USB interface is connected to the ID pin 21 of the CPU. The pull-up circuit 4 is provided for the ID pin 21 of the CPU in the first electronic device 100 to pull up a voltage at the ID pin 21 of the CPU. The pull-up circuit 4 may be provided outside or inside of the CPU 2. A connection point of the pull-up circuit 4 on the line between the ID pin 11 of the micro USB interface and the ID pin 21 of the CPU may be referred to as a point H, and the diode 3 may be provided between the ID pin 11 of the micro USB interface and the point H. Thus, when the first electronic device 100 is connected to a device having a Type C USB interface via a conversion line 8 and a CC1 pin is connected to a VBUS via a resistor in the device having the Type C USB interface, the diode 3 may isolate a voltage of the VBUS from the voltage at the ID pin 21 of the CPU, and the voltage at the ID pin 21 of the CPU will not be influenced by the voltage of the VBUS, and will not be elevated to 5V. Thus, the first electronic device 100 will not be damaged.

Alternatively, a first resistor 5 may be connected in series in the line between the ID pin 11 of the micro USB interface and the ID pin 21 of the CPU.

In an embodiment, the first resistor 5 may be provided at an arbitrary position in the line between the ID pin 11 of the micro USB interface and the ID pin 21 of the CPU, or may be provided between the diode 3 and the ID pin 21 of the CPU, or may be provided between the diode 3 and the ID pin 11 of the micro USB interface. By providing the first resistor 5, the ID pin 21 of the CPU may be further protected, and in a case where a voltage at the ID pin 11 of the micro USB interface is relatively large and the diode 3 fails to block a reverse current, the first resistor 5 can further decrease the reverse current.

Optionally, as shown in Fig. 1, the pull-up circuit 4 includes a pull-up power supply 41 and a second resistor 42. A voltage of the pull-up power supply 41 (referred to as a pull-up voltage) may be 1.8V. The second resistor 42 may be connected in series between the pull-up power supply 41 and the point H.

Optionally, a resistance value of the second resistor 42 may be set to be greater than a lower limit of a preset resistance value.

In an embodiment, the ID pin 21 of the CPU plays an important role in recognizing an external electronic device that is connected through the micro USB interface 1, that is, when an electronic device is connected, the connection of the electronic device is found by a change in the voltage at the ID pin 21 of the CPU. For a type of device having a Type C USB interface, a CC1 pin 71 of the device is grounded via a resistor (hereinafter referred to as a third resistor 6) and, in order to increase the recognition rate when this type of device having the Type C USB interface is connected to the micro USB interface 1 of the first electronic device 100 via the conversion line 8, the resistance value of the second resistor 42 may be set such that the resistance value is greater than a specified lower limit of resistance value to guarantee the amplitude of changes in the voltage at the ID pin 21 of the CPU when this type of device having the Type C USB interface is connected to the first electronic device 100, and thereby the recognition rate is increased. By setting the resistance value of the second resistor 42, when the micro USB interface 1 of the first electronic device 100 is not connected to other electronic devices, a voltage detected by the ID pin 21 of the CPU is the voltage of the pull-up power supply 41, for example 1.8V. When the micro USB interface 1 of the first electronic device 100 is connected to the above type of device having the Type C USB interface via the conversion line 8, as shown in Fig. 2, total resistance of the diode 3 and the third resistor 6 and a resistance of the second resistor 42 form a voltage division to the pull-up voltage, and the ID pin 21 of the CPU detects a voltage divided by the total resistance of the diode 3 and the third resistor 6. If the resistance value of the second resistor 42 is large enough, the voltage detected by the ID pin 21 of the CPU may be controlled within 30% of the pull-up voltage. Thus, the first electronic device 100 may detect the connection of the device having the Type C USB interface. Thereby, the lower limit of the resistance value may be set based on this principle.

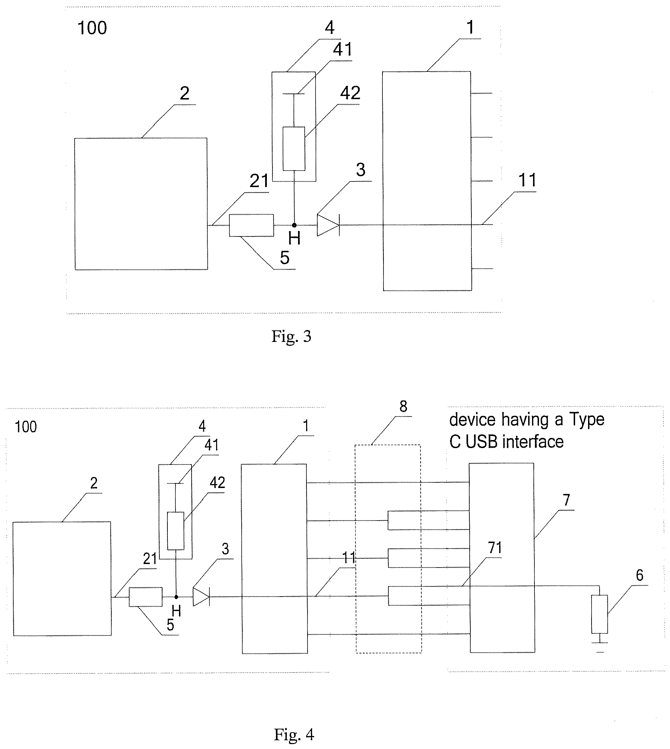

Alternatively, as shown in Fig. 3, the first resistor 5 may be provided in a line between the pull-up circuit 4 and the ID pin 21 of the CPU.

In an embodiment, for the above type of device having the Type C USB interface whose CC1 pin is grounded via the resistor, in order to increase the recognition rate when this type of device having the Type C USB interface is connected to the micro USB interface 1 of the first electronic device 100 via the conversion line 8, the first resistor 5 may be provided in the line between the pull-up circuit 4 and the ID pin of the CPU, that is, provided in the line between the point H and the ID pin of the CPU. Thus, when the micro USB interface 1 of the first electronic device 100 is not connected to other electronic devices, a voltage detected by the ID pin 21 of the CPU is the voltage of the pull-up power supply 41 in the pull-up circuit 4, for example 1.8V. When the micro USB interface 1 of the first electronic device 100 is connected to the above type of device having the Type C USB interface via the conversion line 8, as shown in Fig. 4, if the first resistor 5 is provided in the line between the point H and the ID pin 21 of the CPU, the ID pin 21 of the CPU detects a voltage divided by the total resistance of the diode 3 and the third resistor 6. However, if the first resistor 5 is provided in the line between the point H and the ID pin 11 of the micro USB interface, the first resistor 5 together with the diode 3 and the third resistor 6 performs voltage division with the second resistor 42, and the ID pin 21 of the CPU detects a voltage divided by total resistance of the diode 3, the first resistor 5 and the third resistor 6. Thus, providing the first resistor 5 in the line between the point H and the ID pin 21 of the CPU is more beneficial for decreasing the voltage detected by the ID pin 21 of the CPU at this time. Thus, the first electronic device 100 more easily detects the connection of the device having the Type C USB interface.

In an embodiment of the present invention, a first electronic device includes a micro USB interface, a CPU and a diode. A pull-up circuit of an ID pin of the CPU is connected to a line between the ID pin of the CPU and an ID pin of the micro USB interface. The diode is provided in the line between the ID pin of the CPU and the ID pin of the micro USB interface, and is positioned between the pull-up circuit and the ID pin of the micro USB interface. The diode has a conducting direction pointing from the ID pin of the CPU to the ID pin of the micro USB interface. Thus, if the first electronic device is connected to a device having a Type C USB interface via a conversion line and a CC1 pin and a VBUS are connected in the device having the Type C USB interface, then the diode may isolate a voltage of the VBUS from a voltage at the ID pin of the CPU. Consequently, the electronic device may be prevented from being damaged.

An embodiment of the present invention further provides a data transmission system. The data transmission system includes a second electronic device 200 and the first electronic device 100 as described in above embodiments. The second electronic device 200 includes a Type C USB interface 7, and the Type C USB interface 7 of the second electronic device 200 is connected to the micro USB interface 1 of the first electronic device 100 via a conversion line 8.

The conversion line 8 may be a conversion line providing conversion between the Type C USB interface and the micro USB interface.

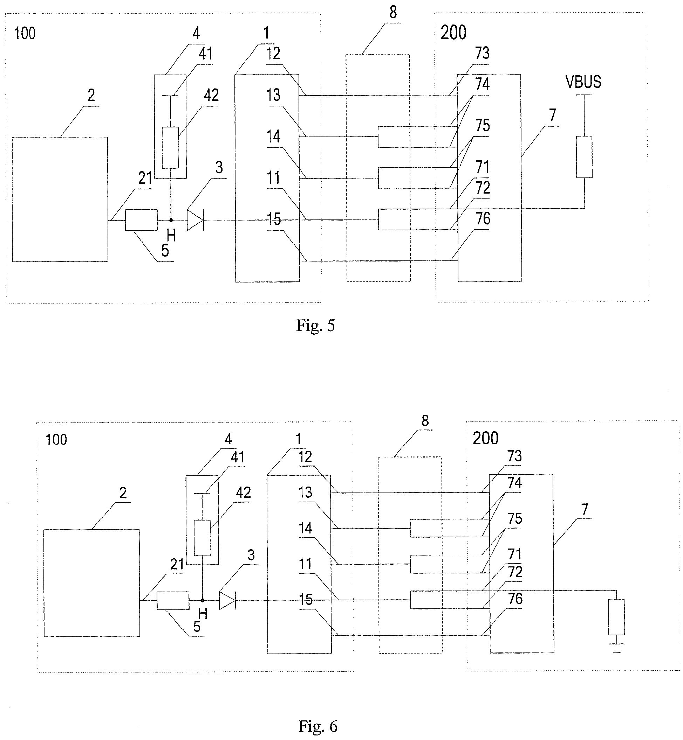

In an embodiment, the second electronic device 200 may be a device having a Type C USB interface, such as a U-disk, a USB speaker or the like. The second electronic device 200 may be any type of device having a Type C USB interface, it may be the above-described type of device having the Type C USB interface whose CC1 pin 71 is connected to the VBUS via a resistor, as shown in Fig. 5, or may be the above-described type of device having the Type C USB interface whose CC1 pin 71 is grounded via a resistor, as shown in Fig. 6.

Alternatively, as shown in Figs. 5 and 6, the CC1 pin 71 and a CC2 pin 72 of the Type C USB interface are connected to the ID pin 11 of the micro USB interface via the conversion line 8; a VBUS pin 73 of the Type C USB interface is connected to a VBUS pin 12 of the micro USB interface via the conversion line 8; a D- pin 74 of the Type C USB interface is connected to a D- pin 13 of the micro USB interface via the conversion line 8; a D+ pin 75 of the Type C USB interface is connected to a D+ pin 14 of the micro USB interface via the conversion line 8; and a GND pin 76 of the Type C USB interface is connected to a GND pin 15 of the micro USB interface via the conversion line 8.

In an embodiment of the present invention, the first electronic device includes a micro USB interface, a CPU and a diode, wherein a pull-up circuit of an ID pin of the CPU is connected to a line between the ID pin of the CPU and an ID pin of the micro USB interface, the diode is provided in the line between the ID pin of the CPU and the ID pin of the micro USB interface, and is positioned between the pull-up circuit and the ID pin of the micro USB interface, and the diode has a conducting direction pointing from the ID pin of the CPU to the ID pin of the micro USB interface. Thus, if the first electronic device is connected to a device having a Type C USB interface via a conversion line 8 and a CC1 pin and a VBUS are connected in the device having the Type C USB interface, then the diode may isolate a voltage of the VBUS from a voltage at the ID pin of the CPU. Consequently, the electronic device may be prevented from being damaged.

Those skilled in the art may understand, the whole or part of the steps in the above embodiments may be achieved by hardware, or may be achieved by relevant hardware which is instructed by using program. The program may be stored in a computer readable storage medium, and the storage medium may be an ROM, a magnetic disk or an optical disk, etc.

The above contents are only the preferable embodiments of the present invention, which are not used to limit the present invention.

## Claims

1. A first electronic device (100), **characterized in that** the first electronic device comprises a micro USB interface (1), a CPU (2) and a diode (3), wherein:
a pull-up circuit (4) of an ID pin (21) of the CPU (2) is connected to a line between the ID pin (21) of the CPU and an ID pin (11) of the micro USB interface (1);
the diode (3) is provided in the line between the ID pin (21) of the CPU (2) and the ID pin (11) of the micro USB interface (1), and is positioned between the pull-up circuit (4) and the ID pin (11) of the micro USB interface (1); and
the diode (3) has a conducting direction pointing from the ID pin (21) of the CPU (2) to the ID pin (11) of the micro USB interface (1),
**characterized in that** a first resistor (5) is connected in series in the line between the ID pin (11) of the micro USB interface (1) and the ID pin (21) of the CPU (2).

2. The first electronic device (100) according to claim 1, **characterized in that** the first resistor (5) is provided in a line between the pull-up circuit (4) and the ID pin (21) of the CPU (2).

3. The first electronic device (100) according to claim 1 or 2, **characterized in that** the pull-up circuit (4) comprises a pull-up power supply (41) and a second resistor (42).

4. The first electronic device (100) according to claim 3, **characterized in that** a resistance value of the second resistor (42) is greater than a lower limit of a preset resistance value.

5. The first electronic device according to claim 3 or 4, **characterized in that** a voltage of the pull-up power supply is 1.8V.

6. The first electronic device according to any one of claims 1 to 5, **characterized in that** the diode (3) comprises a Schottky diode.

7. A data transmission system, **characterized in that** the system comprises a second electronic device (200) and the first electronic device (100) according to any one of claims 1 to 6, the second electronic device (200) comprising a Type C USB interface (7), wherein:
the Type C USB interface (7) of the second electronic device is connected to the micro USB interface (1) of the first electronic device via a conversion line (8).

8. The data transmission system according to claim 7, **characterized in that** a CC1 pin (71) and a CC2 pin (72) of the Type C USB interface (7) are connected to the ID pin (11) of the micro USB interface (1) via the conversion line (8);
a power supply VBUS pin (73) of the Type C USB interface (7) is connected to a VBUS pin (12) of the micro USB interface (1) via the conversion line (8);
a D- pin (74) of the Type C USB interface (7) is connected to a D -pin (13) of the micro USB interface (1) via the conversion line (8);
a D+ pin (75) of the Type C USB interface (7) is connected to a D+ pin (14) of the micro USB interface (1) via the conversion line (8); and
a ground GND pin (76) of the Type C USB interface (7) is connected to a GND pin (15) of the micro USB interface (1) via the conversion line (8).

## Patentansprüche

1. Erste elektronische Vorrichtung (100), **dadurch gekennzeichnet, dass** die erste elektronische Vorrichtung eine Mikro-USB-Schnittstelle (1), eine CPU (2) und eine Diode (3) aufweist, wobei:
eine Pull-up-Schaltung (4) eines ID-Stifts (21) der CPU (2) mit einer Leitung zwischen dem ID-Stift (21) der CPU und einem ID-Stift (11) der Mikro-USB-Schnittstelle (1) verbunden ist,
die Diode (3) in der Leitung zwischen dem ID-Stift (21) der CPU (2) und dem ID-Stift (11) der Mikro-USB-Schnittstelle (1) vorgesehen ist und zwischen der Pull-up-Schaltung (4) und dem ID-Stift (11) der Mikro-USB-Schnittstelle (1) angeordnet ist und
die Diode (3) eine Durchlassrichtung aufweist, die vom ID-Stift (21) der CPU (2) zum ID-Stift (11) der Mikro-USB-Schnittstelle (1) zeigt,
**dadurch gekennzeichnet, dass** ein erster Widerstand (5) in der Leitung zwischen dem ID-Stift (11) der Mikro-USB-Schnittstelle (1) und dem ID-Stift (21) der CPU (2) in Reihe geschaltet ist.

2. Erste elektronische Vorrichtung (100) nach Anspruch 1, **dadurch gekennzeichnet, dass** der erste Widerstand (5) in einer Leitung zwischen der Pull-up-Schaltung (4) und dem ID-Stift (21) der CPU (2) vorgesehen ist.

3. Erste elektronische Vorrichtung (100) nach Anspruch 1 oder 2, **dadurch gekennzeichnet, dass** die Pull-up-Schaltung (4) eine Pull-up-Stromversorgung (41) und einen zweiten Widerstand (42) aufweist.

4. Erste elektronische Vorrichtung (100) nach Anspruch 3, **dadurch gekennzeichnet, dass** ein Widerstandswert des zweiten Widerstands (42) größer als eine untere Grenze eines voreingestellten Widerstandswerts ist.

5. Erste elektronische Vorrichtung nach Anspruch 3 oder 4, **dadurch gekennzeichnet, dass** eine Spannung der Pull-up-Stromversorgung 1,8 V beträgt.

6. Erste elektronische Vorrichtung nach einem der Ansprüche 1 bis 5, **dadurch gekennzeichnet, dass** die Diode (3) eine Schottky-Diode umfasst.

7. Datenübertragungssystem, **dadurch gekennzeichnet, dass** das System eine zweite elektronische Vorrichtung (200) und die erste elektronische Vorrichtung (100) nach einem der Ansprüche 1 bis 6 aufweist, wobei die zweite elektronische Vorrichtung (200) eine USB-Schnittstelle (7) des Typs C aufweist, wobei:
die USB-Schnittstelle (7) des Typs C der zweiten elektronischen Vorrichtung mit der Mikro-USB-Schnittstelle (1) der ersten elektronischen Vorrichtung über eine Umwandlungsleitung (8) verbunden ist.

8. Datenübertragungssystem nach Anspruch 7, **dadurch gekennzeichnet, dass** ein CC1-Stift (71) und ein CC2-Stift (72) der USB-Schnittstelle (7) des Typs C mit dem ID-Stift (11) der Mikro-USB-Schnittstelle (1) über die Umwandlungsleitung (8) verbunden sind,
ein Stromversorgungs-VBUS-Stift (73) der USB-Schnittstelle (7) des Typs C mit einem VBUS-Stift (12) der Mikro-USB-Schnittstelle (1) über die Umwandlungsleitung (8) verbunden ist,
ein D--Stift (74) der USB-Schnittstelle (7) des Typs C mit einem D--Stift (13) der Mikro-USB-Schnittstelle (1) über die Umwandlungsleitung (8) verbunden ist,
ein D+-Stift (75) der USB-Schnittstelle (7) des Typs C mit einem D+-Stift (14) der Mikro-USB-Schnittstelle (1) über die Umwandlungsleitung (8) verbunden ist und
ein Masse-GND-Stift (76) der USB-Schnittstelle (7) des Typs C mit einem GND-Stift (15) der Mikro-USB-Schnittstelle (1) über die Umwandlungsleitung (8) verbunden ist.

## Revendications

1. Premier dispositif électronique (100), **caractérisé en ce que** le premier dispositif électronique comprend une interface micro-USB (1), une unité CPU (2) et une diode (3), dans lequel :
un circuit de tirage vers le haut (4) d'une broche « ID » (21) de l'unité CPU (2) est connecté à une ligne entre la broche « ID » (21) de l'unité CPU et une broche « ID » (11) de l'interface micro-USB (1) ;
la diode (3) est fournie dans la ligne entre la broche « ID » (21) de l'unité CPU (2) et la broche « ID » (11) de l'interface micro-USB (1), et est positionnée entre le circuit de tirage vers le haut (4) et la broche « ID » (11) de l'interface micro-USB (1) ; et
la diode (3) présente une direction conductrice pointant de la broche « ID » (21) de l'unité CPU (2) vers la broche « ID » (11) de l'interface micro-USB (1) ;
**caractérisé en ce qu'**une première résistance (5) est connectée en série dans la ligne entre la broche « ID » (11) de l'interface micro-USB (1) et la broche « ID » (21) de l'unité CPU (2).

2. Premier dispositif électronique (100) selon la revendication 1, **caractérisé en ce que** la première résistance (5) est fournie dans une ligne entre le circuit de tirage vers le haut (4) et la broche « ID » (21) de l'unité CPU (2).

3. Premier dispositif électronique (100) selon la revendication 1 ou 2, **caractérisé en ce que** le circuit de tirage vers le haut (4) comprend une source d'alimentation de tirage vers le haut (41) et une seconde résistance (42).

4. Premier dispositif électronique (100) selon la revendication 3, **caractérisé en ce qu'**une valeur de résistance de la seconde résistance (42) est supérieure à une limite inférieure d'une valeur de résistance prédéfinie.

5. Premier dispositif électronique selon la revendication 3 ou 4, **caractérisé en ce qu'**une tension de la source d'alimentation de tirage vers le haut est de 1,8 V.

6. Premier dispositif électronique selon l'une quelconque des revendications 1 à 5, **caractérisé en ce que** la diode (3) comprend une diode Schottky.

7. Système de transmission de données, **caractérisé en ce que** le système comprend un second dispositif électronique (200) et le premier dispositif électronique (100) selon l'une quelconque des revendications 1 à 6, le second dispositif électronique (200) comprenant une interface USB de type C (7), dans lequel :
l'interface USB de type C (7) du second dispositif électronique est connectée à l'interface micro-USB (1) du premier dispositif électronique par l'intermédiaire d'une ligne de conversion (8).

8. Système de transmission de données selon la revendication 7, **caractérisé en ce qu'**une broche « CC1 » (71) et une broche « CC2 » (72) de l'interface USB de type C (7) sont connectées à la broche « ID » (11) de l'interface micro-USB (1) par l'intermédiaire de la ligne de conversion (8) ;
une broche d'alimentation électrique « VBUS » (73) de l'interface USB de type C (7) est connectée à une broche « VBUS » (12) de l'interface micro-USB (1) par l'intermédiaire de la ligne de conversion (8) ;
une broche « D- » (74) de l'interface USB de type C (7) est connectée à une broche « D- » (13) de l'interface micro-USB (1) par l'intermédiaire de la ligne de conversion (8) ;
une broche « D+ » (75) de l'interface USB de type C (7) est connectée à une broche « D+ » (14) de l'interface micro-USB (1) par l'intermédiaire de la ligne de conversion (8) ; et
une broche de masse « GND » (76) de l'interface USB de type C (7) est connectée à une broche « GND » (15) de l'interface micro-USB (1) par l'intermédiaire de la ligne de conversion (8).
